# EUROPEAN PATENT SPECIFICATION

(11) **EP 2 082 992 B1**
(45) Date of publication and mention of the grant of the patent: **04.05.2016**
(21) Application number: 07831611.4
(22) Date of filing: 12.11.2007
(51) Int. Cl.: C03B 5/187

(54) **MOLTEN GLASS STIRRER ROD AND MOLTEN GLASS STIRRING DEVICE INCLUDING THE MOLTEN GLASS STIRRER**
RÜHRER FÜR SCHMELZGLAS UND RÜHRVORRICHTUNG FÜR SCHMELZGLAS MIT DEM RÜHRER
AGITATEUR POUR VERRE FONDU ET DISPOSITIF D'AGITATION DU VERRE FONDU COMPRENANT L'AGITATEUR

(30) Priority: 13.11.2006 JP 2006306680
(43) Date of publication of application: 29.07.2009
(73) Proprietor: Tanaka Kikinzoku Kogyo K.K., Tokyo 100-6422 (JP)
(72) Inventor: YOSHIDA, Hiromu, Isehara-shi Kanagawa 259-1146 (JP)
(74) Representative: Weickmann & Weickmann PartmbB
(86) International application number: PCT/JP2007/071881
(87) International publication number: WO 2008/059776

(56) References cited:
- DE-A1- 4 124 390
- DE-A1-102004 034 798
- GB-A- 1 328 724
- GB-A- 1 508 167
- JP-A- 61 021 923
- JP-A- 2001 072 426
- JP-A- 2003 073 129
- JP-A- 2004 224 637
- US-A- 2 730 338
- US-A- 2 871 000
- US-A- 3 358 066
- US-A- 3 883 340
- US-A- 4 022 438
- DATABASE WPI Section Ch, Week 198533 Thomson Scientific, London, GB; Class L01, AN 1985-202063 XP002578387 "Glass melt homogeniser - has stirrer blades and/or cylindrical screen with controlled slots area" -& SU 1 135 717 A1 (TARTARINTSEV B V) 23 January 1985 (1985-01-23)

## Description

### Technical Field

The present invention relates to a stirrer for homogenizing molten glass by agitation in a manufacturing process of glass products and, more particularly, to a molten glass stirrer with an agitating blade for homogenizing composition of molten glass and a molten glass stirring device including a molten glass stirrer with an agitating blade.

### Background Art

It is conventionally known that, in glass industry, defects are generated in glass products due to variation of glass composition during glass manufacturing. For example, the defects are phenomena such as streaky striae and reams formed in a plane layer shape. The defects are avoided properly in a glass manufacturing process in view of quality of glass products required by users, manufacturing cost, and the like.

For example, in order to avoid defects due to composition variation such as the streaky striae, various operations for promoting homogenization of glass are generally performed in a melting process during glass manufacturing. In particular, molten glass is machine-agitated in a predetermined tank to promote glass homogenization in a glass melting process when glass products required to have high quality such as high transparency are manufactured.

At this time, for molten glass machine-agitation, often used is a molten glass stirrer in which a spiral, clamp, propeller, helical ribbon, or rod-like agitating blade is attached to a bar member (shaft). The spiral type is more useful among these for molten glass agitation in a molten glass tank (herein, a spiral agitating blade formed around a shaft is simply mentioned as an agitating blade and a molten glass stirrer comprising the spiral agitating blade is simply mentioned as a molten glass stirrer with an agitating blade).

A molten glass stirrer with an agitating blade performs agitation by receiving molten glass on a blade surface of the agitating blade and rotating a periphery of a central axis of the bar. At this time, in accordance with a certain rotation direction, the agitating blade creates spiral flow against the gravity. Then, when the spiral flow reaches the upper surface of the molten glass, it flows down along a wall surface of a molten glass tank. Thus, suitable agitation is performed because the molten glass circulates in the tank (see Patent Document 1).
Patent Document 1: Japanese Patent Laid-Open No. 2003-34539

DE 10 2004 034798 A1 describes a stirring system for glass melts comprising a stirrer with a shaft with a longitudinal axis and two groups of wings, which have at least one blade, which is arranged parallel to the longitudinal axis, and one opening.

### Disclosure of the Invention

The invention is defined by the appended claims.

### Problems to be Solved by the Invention

Recently, agitation technique is required for coping with differentiation of quality levels of glass products and high quality glass production at users' request. Therefore, in view of the requests, the present invention provides a stirrer further homogenizing molten glass composition, further preventing possible defect generation, that is, phenomena such as striae in glass products, and allowing supply of higher quality glass products. Also, it is an object of the present invention to provide a molten glass stirring device with the stirrer.

### Means for Solving the Problems

In order to solve the problems, the inventor of the present invention reaches technical thoughts of a molten glass stirrer and a molten glass stirring device including a stirrer described below.

The present invention provides a molten glass stirrer comprising: a shaft; and an agitating blade fixed so as to be formed spirally around the shaft, characterized in that the agitating blade is provided with openings through the agitating blade. According to the present invention, since the agitating blade of the molten glass stirrer can cut the molten glass flow in a substantially vertical direction to the shaft, new flow is created and homogenization of molten glass can be further promoted.

The openings are located in a radial direction with the shaft being a center, wherein the openings have an elongated rectangular shape whose longitudinal direction corresponds to the radial direction or the openings have an axisymmetric boomerang shape whose symmetric axis corresponds to a vertical direction to the radial direction. According to the present invention, since the openings through the agitating blade are located radially with the shaft of the molten glass stirrer being a center, the molten glass flow is gradually cut at a plurality of areas. Thus, for further homogenization of the molten glass, the cutting by the openings can create flow whose direction is different from a vector direction of fluid of conventional spiral flow.

Further, the present invention, in one aspect, provides the molten glass stirrer of the invention, characterized in that the openings have an elongated rectangular shape whose longitudinal direction substantially corresponds to the radial direction. According to the present invention, since the openings have an elongated rectangle, flow velocity of the primary spiral flow of the molten glass flow is not lowered. Moreover, the openings exist gradually along an axial direction of the molten glass stirrer, so that the molten glass can be cut equally. Additionally, the reason why the openings have an elongated rectangular shape is to prevent that a wide rectangular shape lowers the flow velocity of the primary spiral flow, also strength of the agitating blade, and therefore, durability of the molten glass stirrer.

The present invention, in another aspect, provides the molten glass stirrer of the invention, characterized in that the openings have an axisymmetric boomerang shape whose symmetric axis substantially corresponds to a vertical direction to the radial direction. According to the present invention, since the openings have an axisymmetric boomerang shape, the flow velocity of the primary spiral flow of the molten glass flow is not lowered. Moreover, the openings with a boomerang shape cut the molten glass flow, and therefore, according to the present invention, the openings effectively cut the molten glass flow similar to the elongated rectangular openings.

The present invention provides the molten glass stirrer of the invention, characterized in that the molten glass stirrer with the agitating blade includes platinum or alloy of platinum and rhodium. Platinum or alloy of platinum and rhodium has heat resistance and strength, and hence preferable as a component (metallic material) of the molten glass stirrer. Oxide-dispersion-strengthened platinum alloy may also be used. Another preferable metallic material is gold, alloy of platinum and gold, or the like.

The present invention also provides a molten glass stirring device comprising: the molten glass stirrer of the invention; and a cylindrical molten glass tank with a bottom having a heating portion capable of maintaining molten glass in a molten state, and being able to hold a certain amount of the molten glass in a molten state, characterized in that the shaft of the molten glass stirrer is located along a vertical central axis of the molten glass tank.

The molten glass stirrer of the present invention is used in a melting furnace such as a crucible furnace, a tank furnace and an electric furnace particularly in a glass factory, that is, in a molten glass agitating tank of the present application. Specifically, at least the agitating blade is provided so as to be soaked sufficiently in molten glass inside the molten glass tank. The molten glass agitating tank is preferably a cylindrical tank with a sealed bottom and the shaft of the molten glass stirrer is preferably located at the central axis of the cylindrical tank. This is because symmetricity is desired for homogenizing the molten glass. Additionally, it is not preferable in view of strength, power consumption, safety and the like that the molten glass stirrer take heavier loads, as the shaft is apart from the central axis of the cylindrical tank.

It is also preferable that the molten glass stirrer is rotatable at the upper part of the molten glass agitating tank of the molten glass stirring device and the shaft is located and fixed in a vertical direction at the center of the molten glass agitating tank. Typically, the shaft of the molten glass stirrer works with a motor for rotation control.

In the molten glass stirring device, it is necessary that all parts in contact with the molten glass should be material having a higher melting point than the molten glass. Furthermore, metallic material with a high melting point is preferable for easy plasticity process.

According to the molten glass stirring device of the present invention, further homogenization of the molten glass can be achieved, and therefore, high quality glass products can be supplied in response to requests from users.

### Brief Description of the Drawings

Fig. 1 is a top view of a doughnut shape disc being an agitating blade of a first embodiment of the present invention;
Fig. 2 is a schematic view of a molten glass stirrer having the agitating blade of the first embodiment of the present invention;
Fig. 3 is a schematic view of a molten glass stirring device of the present invention;
Fig. 4 is a partial sectional view of the agitating blade of the present invention generally illustrating behavior of molten glass particularly at an area including an opening; and
Fig. 5 is a plan view of a doughnut shape disc being an agitating blade of a second embodiment of the present invention.

### Best Mode for Carrying Out the Invention

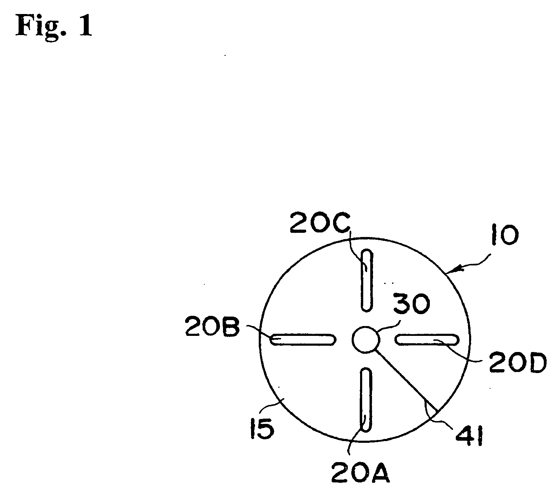

Hereinafter, preferred embodiments of the present invention are described with reference to Figs. 1 to 5.

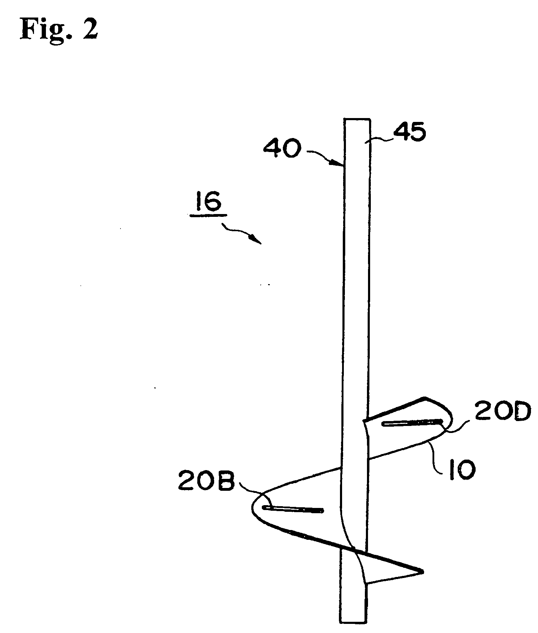

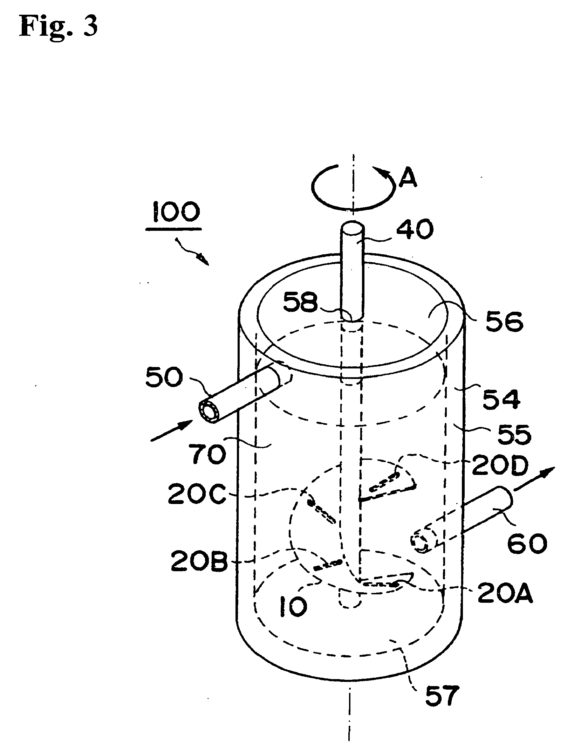

First embodiment: Fig. 1 is a top view of a metallic doughnut shape disc 10 (hereinafter, disc 10) being a material member of an agitating blade 16 (reference numeral 16 in Fig. 2). A thickness of the disc 10 and sizes of its radius and the like are preferably set according to various conditions such as amount of molten glass to be agitated (volume of a molten glass tank (radius and height thereof)), and the number of agitation rotation. For example, in a case of a closed end cylindrical shape of a molten glass agitating tank 54 (Fig. 3) with an inner diameter 250 mm and a height 300 mm, it is preferable that the disc 10 has the thickness of 1.0 to 2.0 mm and the radius of 100 to 110 mm. Additionally, an inner diameter of a shaft fitting aperture 30 in the disc 10 is preferably set depending on an axial diameter of a stirrer 40.

Further, in the case where the disc 10 is the above size, it is preferable that elongated rectangular openings 20A, 20B, 20C and 20D have a width of 5 to 20 mm and a length of 50 to 80 mm. The width may be set to 10 to 15 mm. A narrower width reduces cut effect and a wider width weakens spiral flow. It is considered that a shorter length of the opening reduces cut effect and a longer length weakens material strength around an outer periphery.

It is necessary for metallic material of the disc 10 to have a melting point higher than glass melting temperature, and platinum is preferably used, while alloy of platinum with rhodium or the like can be used. In the case, a ratio of platinum to rhodium is preferably 70 to 95 : 30 to 5 (the sum of platinum and rhodium is 100). Another usable metals are, for example, gold, alloy of platinum and gold, and strengthened platinum such as oxide-dispersion-strengthened platinum. Note that metallic materials for a molten glass stirring device 100 (see Fig. 3) are the same.

Returning to Fig. 1 for description, the shaft fitting aperture 30 of the molten glass stirrer 40 (see Fig. 2) is provided at a center of the disc 10, and also provided is a cut portion 41 cutting processed linearly from an outer peripheral end of the disc 10 to the center of the disc 10. Then, the four elongated rectangular openings 20A, 20B, 20C and 20D are located in a thickness direction of the disc 10 forming an angle of 90° adjacent to each other from a center of the agitating shaft 45 of the molten glass stirrer 40 to a radial direction.

In order to create further homogenized glass composition, the number of the elongated rectangular openings (20A, 20B, 20C and 20D) may be more than four, however, the number of the openings should not be increased unnecessarily. This is because necessary strength of spiral flow for agitation by an agitating blade 16 (see Fig. 2) is weakened, a possibility of bubble generation being a factor of defect generation or the like increases, and further, strength of the agitating blade 16 is similarly weakened.

Fig. 2 is a schematic view of the molten glass stirrer 40 seen from a lateral direction (horizontal direction). The agitating blade 16 shown in Fig. 2 is obtained by plasticity processing one disc 10 and has one strip of agitating blade in one turn of a spiral.

Additionally, in response to the request of homogenization of molten glass composition, it is possible that the number of strips (the number of spiral turns) of the agitating blade 16 can be increased in accordance with the height of the molten glass agitating tank 54, a diameter of a circular lid portion 56, a diameter of a circular bottom portion 57 or the volume of the molten glass agitating tank 54. Further, a radius of the spiral can also be enlarged by enlarging a radius of the disc 10.

Now, a method for producing the molten glass stirrer 40 is described below. Initially, both ends of the cut portion 41 that is shown in Fig. 1 and is cut from one part of the outer periphery of the disc 10 to the center are bent in different directions each other. Bent parts are in the middle of the openings 20A and 20B shown in Fig. 1, and in the middle of the openings 20C and 20D. Note that the surface of the agitating blade 16 does not have a crease. Then, while surrounding the shaft 45 of the molten glass stirrer 40, the disc 10 is fitted to the shaft 45 through the shaft fitting aperture 30. The outer periphery of the shaft fitting aperture 30 is fixed to the shaft 45 by welding or laser beam. Then, while the disc 10 is bent spirally so as to form the agitating blade 16, the disc 10 is wrapped around the shaft 45 to be fixed by welding or laser beam in the same manner. At this time, it is possible that a spiral groove is formed at a contact part of the outer periphery of the shaft fitting aperture 30 and the shaft 45, and on the surface of the shaft 45 corresponding to a contact part wrapped around the shaft 45, and then the agitating blade 16 is formed with the disc 10 being fitted into the groove. In this case, welding or laser beam is also used for fixing. If the latter method is employed, the agitating blade 16 is easily manufactured consistently in a certain shape.

The shaft 45 may be either hollow or solid. Being hollow is preferable in view of material cost and labor saving, while being solid is preferable in view of strength. In the case of being hollow, it is necessary that an open end of the shaft 45 should be sealed to prevent intrusion of molten glass.

Additionally, it is preferable that the shaft 45 of the molten glass stirrer 40 projects from a bottom of the agitating blade 16 (see Fig. 2). This is because contact of the agitating blade 16 and the circular bottom portion 57, production of a part where the agitating blade 16 is not fixed to the shaft 45, and the like are avoided.

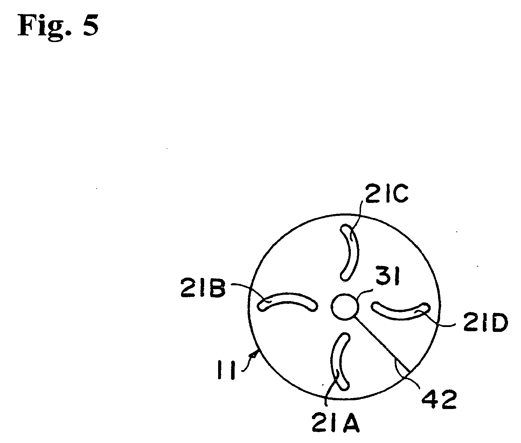

Second embodiment: Fig. 5 shows a disc 11 of a second embodiment having openings for cutting molten glass flow 70 similar to the first embodiment (hereinafter, description similar to the first embodiment is omitted). As shown in Fig. 5, cross sections of openings 21 A, 21 B, 21 C, and 21 D of the second embodiment have an axisymmetric boomerang shape. The boomerang openings 21 A, 21 B, 21 C, and 21 D are located at corresponding locations similar to the four openings of the elongated rectangular apertures shown in Fig. 1.

Behavior of the openings 21 A, 21 B, 21 C, and 21 D of the second embodiment for cutting molten glass flow is basically not different from behavior of the openings of the first embodiment, however, due to specificity of the shape, it is different that fluid of the molten glass flow 70 after being cut are formed in a substantially more boomerang shape or chevron shape by the openings of the second embodiment than by the openings of the first embodiment. Similarly, further homogenization of the molten glass is performed in the second embodiment. The openings may be in a triangular shape, a diamond shape, or the like.

Fig. 3 is a schematic view illustrating the molten glass stirring device 100 where the molten glass stirrer 40 is located in the molten glass agitating tank 54 with molten glass. Here, the case of the first embodiment is described (the second embodiment is the same).

The molten glass agitating tank 54 comprises: the circular bottom portion 57; a cylindrical side portion 55 extending vertically upwardly (upright) from the outer periphery of the circular bottom portion 57; and the circular lid portion 56 having an opening at the center thereof so as to allow the molten glass stirrer 40 to be inserted and rotated.

Additionally, in the embodiment, a pipe type molten glass induction duct 50 is provided at an upper side of the cylindrical side portion 55 of the molten glass stirring device 100. Also provided is a pipe type molten glass excretory duct 60 for transferring the molten glass to a molten glass supply duct (not shown) for glass molding process, and is located so that a bottom edge of a pipe inner surface of the molten glass excretory duct 60 is fitted to the circular bottom portion 57 inside the molten glass agitating tank 54 of the device 100. This is because of preventing the molten glass from staying on the circular bottom portion 57. Further, the molten glass induction duct 50 and the molten glass excretory duct 60 may be provided with valve means such as a heat-resistance flow regulation control valve.

Then, the molten glass 70 is poured in the molten glass agitating tank 54 from the molten glass induction duct 50 and the molten glass 70 is transferred from the molten glass excretory duct 60 to the molten glass supply duct (not shown) connected to a glass molding device (not shown).

The molten glass stirrer 40 is inserted in the molten glass agitating tank 54 through an opening 58 at the center of the circular lid portion 56. The molten glass stirrer 40 works with a motor (not shown) near the upper end thereof, and is controlled so as to be rotatable either clockwise or counterclockwise (a direction of an arrow A) synchronizing motor rotation and to be rotation speed variable. In the embodiment, the molten glass stirrer 40 is adapted to rotate in the direction of the arrow A and preferable spiral flow and cut flow obtained by the openings 20A, 20B, 20C and 20D of the molten glass 70 are created in the molten glass agitating tank 54. As a result, homogenization of glass composition can be achieved.

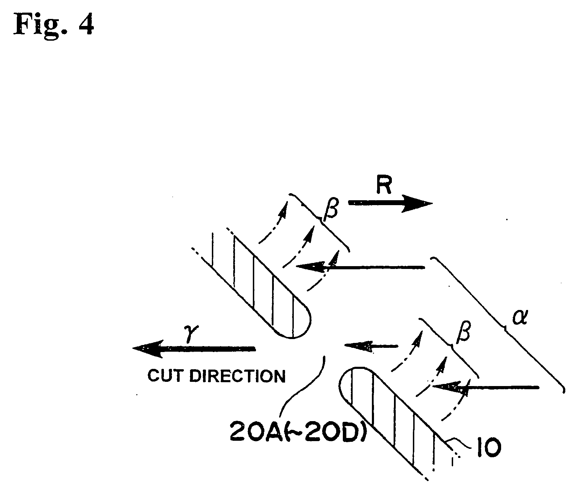

Additionally, description about the cut flow is added with reference to Fig. 4. If the molten glass stirrer 40 is rotating in a direction of an arrow R in Fig. 4, molten glass flow α is cut in a substantially vertical direction (or substantially horizontal direction) to the shaft at four points of the elongated rectangular openings 20A, 20B, 20C and 20D (or 21 A, 21 B, 21 C and 21 D) provided on the agitating blade 16 as long as the molten glass stirrer 40 is rotating. Thus, cut flow γ different from conventional spiral flow β of the molten glass can be created, so that new molten glass homogenization means is added. As a result, preventing defects such as striae possibly generated in glass products is further ensured, and finally, high quality glass products can be manufactured.

As shown in Fig. 4, it is preferable that both ends of the opening 20A (20B, 20C and 20D) is processed in semicircular shape seen from a vertical direction to the paper surface of Fig. 4 and its edges are also R-processed. This is because of preventing defect generation such as bubble generation, metal fatigue (destruction) generation or the like at the edges.

Now, in an example of the first embodiment, molten glass is agitated and its performance is evaluated. Evaluation conditions and a result are described below.

### 1. Evaluation conditions:

1) Temperature of the molten glass 70: 1500°C
2) The molten glass stirrer 40 (made of oxide-dispersion-strengthened platinum alloy): The shaft 45 had a hollow structure with a length 800 mm, a diameter 1.8 mm and a thickness 0.2 mm. The blade 16 had a spiral structure with a height 80 mm. As a material before processed, the disc 10 with a diameter 200 mm and a thickness 1 mm had a circular aperture (the shaft fitting aperture 30) with an inner diameter 2.5 mm, and the elongated rectangular openings with a length 70 mm and a width 5 mm whose ends had a semicircular shape of 0.5 mmR and edges were R-processed (see Fig. 4).
3) The molten glass tank 54 (oxide-dispersion-strengthened platinum alloy): A closed end cylindrical structure (cut structure) was employed with a height 300 mm, a diameter 500 mm and a thickness 1 mm.
4) The molten glass 70 equivalent to 70 % of the volume of the molten glass tank 54 was poured to be agitated with the number of agitation rotation 30 rpm for 60 minutes.

### 2. Evaluation method and the result:

Photoirradiation was performed according to typical glass quality inspection to glass obtained under the conditions and visual observation of a cross section of the glass was performed. As a result, striae, reams, streaks, bubbles and the like were not observed in the glass. Thus, it can be considered that agitation was performed suitably.

As described above, according to the molten glass stirring device 100 of the present invention, further equal homogenization of molten glass flow is possible, so that defects (phenomena) possibly generated in glass products such as striae, reams formed in a planar stratified manner or streaks can be avoided more certainly than the.conventional technique, thereby being able to supply higher quality glass products stably.

### Industrial Applicability

The present invention can decrease nonuniformity of glass composition and achieve further homogenization thereof. The present invention contributes to manufacturing high quality glass products in which higher quality level is required.

## Claims

1. A molten glass stirrer (40) comprising: a shaft (45); and a spiral agitating blade (16) fixed around the shaft,
wherein the spiral agitating blade (16) is provided with openings (20A-D or 21A-D) passing through the agitating blade,
wherein the openings (20A-D or 21 A-D) are located in a radial direction with the shaft (45) being a center, and
wherein the openings have an elongated rectangular shape whose longitudinal direction corresponds to the radial direction (20A-D), or the openings have an axisymmetric boomerang shape whose symmetry axis corresponds to a vertical direction to the radial direction (21A-D).

2. The molten glass stirrer (40) according to claim 1, wherein the molten glass stirrer with the spiral agitating blade (16) includes platinum or alloy of platinum and rhodium.

3. A molten glass stirring device (100) comprising: the molten glass stirrer (40) according to any one of claims 1 or 2; and a cylindrical molten glass tank (54) with a bottom (57), wherein the shaft (45) is located at a vertical central axis of the molten glass tank.

## Patentansprüche

1. Rührer (40) für geschmolzenes Glas, umfassend eine Welle (45) und eine sich spiralförmig bewegendes Blatt (16), das an der Welle befestig ist,
worin das sich spiral bewegende Blatt (16) ausgestattet ist mit Öffnungen (20A-D oder 21 A-D), die durch das sich bewegende Blatt führen,
worin die Öffnungen (20A-D oder 21 A-D) in einer radialen Richtung mit der Welle (45) als Zentrum angeordnet sind, und
worin die Öffnungen eine ausgedehnte rechteckige Form haben, deren longitudinale Richtung mit der radialen Richtung (20A-D) korresondiert oder die Öffnungen eine achsensymmetrische Boomerangform aufweisen, deren Symmetrieachse einer vertikalen Richtung zur radialen Richtung (21A-D) entspricht.

2. Rührer (40) für geschmolzenes Glas nach Anspruch 1, worin der Rührer für geschmolzenes Glas mit der sich spiralförmig bewegenden Klinge (16) Platin oder eine Legierung von Platin und Rhodium umfasst.

3. Vorrichtung (100) zum Rühren von geschmolzenem Glas, umfassend den Rührer (40) zum Rühren von geschmolzenem Glas nach einem der Ansprüche 1 oder 2; und einen zylinderförmigen Behälter (54) für geschmolzenes Glas mit einem Boden (57), worin die Welle (45) an einer vertikalen zentralen Achse des Behälters für geschmolzenes Glas angeordnet ist.

## Revendications

1. Agitateur de verre fondu (40) comprenant: un arbre (45); et une lame hélicoïdale de l'agitateur (16) fixé autour de l'arbre, dans lequel la lame hélicoïdale de l'agitateur est pourvue d'ouvertures (20A-D ou 21A-D) passant par la lame d'agitation, dans lequel les ouvertures (20A-D ou 21 A-D) sont disposée dans une direction radiale de l'arbre (45) étant un centre, et dans lequel les ouvertures ont une forme rectangulaire allongée dont la direction longitudinale correspond à la direction radiale (20A-D) ou les ouvertures ont une forme axiale symétrique de boomerang dont la symétrie axiale correspond à une direction verticale par rapport à la direction radiale (21A-D).

2. Agitateur de verre fondu (40) selon la revendication 1, dans lequel l'agitateur de verre fondu avec la lame hélicoïdale de l'agitateur (16) comprend du platine ou un alliage platine et rhodium.

3. Dispositif d'agitation de verre fondu (100), comprenant: l'agitateur de verre fondu (40) selon l'une quelconque des revendications 1 ou 2; et une cuve (54) cylindrique de verre fondu avec un fond (57), dans lequel l'arbre (45) est située à un axe central vertical de la cuve de verre fondu.
